Europäisches Patentamt

European Patent Office

Office européen des brevets

(19)

(11) Veröffentlichungsnummer: **0 019 794**
**B1**

(12)

# EUROPÄISCHE PATENTSCHRIFT

(45) Veröffentlichungstag der Patentschrift: **01.06.83**

(21) Anmeldenummer: **80102645.1**

(22) Anmeldetag: **13.05.80**

(51) Int. Cl.³: **C 02 F 1/28, B 01 D 15/00,**
**B 01 D 23/00, B 01 D 27/08**

(54) **Wasserreinigungsvorrichtung.**

(30) Priorität: **17.05.79 DE 2919901**

(43) Veröffentlichungstag der Anmeldung:
**10.12.80 Patentblatt 80/25**

(45) Bekanntmachung des Hinweises auf die Patenterteilung:
**01.06.83 Patentblatt 83/22**

(84) Benannte Vertragsstaaten:
**AT BE CH DE FR GB IT LI LU NL SE**

(56) Entgegenhaltungen:
**CH - A - 569 504**
**DE - A - 2 163 836**
**FR - A - 2 309 478**
**FR - A - 2 392 940**
**US - A - 2 224 577**
**US - A - 4 051 807**

(73) Patentinhaber: **Brita Wasserfilter G.M.b.H.**
**Waldstrasse 4**
**D-6204 Taunusstein 4 (DE)**

(72) Erfinder: **Hankammer, Heinz**
**Waldstrasse 4**
**D-6204 Taunusstein 4 (DE)**

(74) Vertreter: **Weber, Dieter, Dr. et al,**
**Dr. Dieter Weber und Klaus Seiffert**
**Patentanwälte Gustav-Freytag-Strasse 25**
**D-6200 Wiesbaden 1 (DE)**

Courier Press, Leamington Spa, England.

Wasserreinigungsvorrichtung

Die Erfindung betrifft eine Vorrichtung zur Wasserreinigung mit einem trichterförmigen Teil, einer Hülse und mit zwei siebartigen Verschlußteilen an den beiden Enden, die einen Aufnahmeraum für eine körniges, in Wasser nicht lösliches Reinigungsmittel begrenzen und deren Durchtrittsöffnungen kleiner als die Körner des Reinigungsmittels sind, wobei die Hülse mit dem trichterförmigen Teil aus einem Stück geformt ist und in der Hülse ein Einsatz, an dessen beiden entgegengesetzten Enden die siebartigen Verschlußteile vorgesehen sind, herausnehmbar angeordnet ist.

Es ist bereits eine Wasserreinigungsvorrichtung bekannt, bei welcher die Hülse lösbar mit dem trichterförmigen Teil verbunden ist. Dabei ist das trichterförmige Teil zwar aus einem elastischen Material hergestellt und weist einen Ansatzstutzen mit einem nach innen gerichteten Ringflansch auf, der mit einem nach außen gerichteten Ringflansch an der Hülse zusammenwirkt und bei richtiger Handhabung auch flüssigkeitsdicht abschließt. Es hat sich jedoch gezeigt, daß der Endverbraucher bei unsachgemäßer Handhabung die Hülse mitunter nicht genau koaxial in das gitterförmige Teil einsetzt, so daß infolge eines Verkantens Undichtigkeiten auftreten.

Bekannt sind auch Wasserreinigungsvorrichtungen, bei denen die Hülse einstückig am trichterförmigen Teil vorgesehen sind. Bei diesen Vorrichtungen befindet sich aber am unteren Ende der Hülse das eine siebartige Verschlußteil, während das andere lose mitgeliefert und nach Füllen der Hülse mit dem körnigen Reinigungsmittel am oberen Ende aufgelegt wird. Das richtige, für die Wasserreinigungsvorrichtung vorgesehne Reinigungsmittel ist zwar durch eine Oberflächenbehandlung im wesentlichen keimfrei gemacht, z.B. durch Versilbern der Oberfläche der Aktivkohle. Es werden vom Endverbraucher häufig aber Reinigungsmittel verwendet, die entweder nicht oder nur teilweise einer Oberflächenbehandlung unterzogen wurden. Beim Einfüllen des Reinigungsmittels in die Hülse können daher in nachteiliger Weise zusätzliche Keime in die losen Körner eingeschleppt werden. Es hat sich ferner als nachteilig gezeigt, daß eine Vernetzung der siebartigen Öffnungen im Verschlußteil, insbesondere am oberen Ende der Hülse auftreten mit der Folge, daß der Wasserdurchlauf durch den mit Reinigungsmittel gefüllten und durch die siebartigen Verschlußteile begrenzten Raum erheblich verlangsamt wird.

Schließlich ist aus der US—A—2 224 577 sowie aus der FR—A—2 392 940 eine Wasserreinigungsvorrichtung der eingangs genannten Art bekannt, bei welcher das trichterförmige Teil mit der einstückig angeformten Hülse in den Hals eines oben verengten und unten ausgebauchten Flüssigkeitsbehälters über einen Dichtring einsetzbar ist, wobei der Dichtring die Hülse an ihrer Übergangsstelle in den Trichter von außen umgreift und eine Auflage auf den leicht nach außen gebördelten äußeren Rand des unteren Flüssigkeitsgefäßes erlaubt. Hierdurch wäre ein luftdichter Abschluß des Volumens des unteren Flüssigkeitsbehälters gegeben, und es könnte zu reinigende Flüssigkeit aus dem trichterförmigen Teil durch die Hülse und den Einsatz nicht nach unten dringen, weil der Druck der von unten dagegenstehenden Luft den Durchfluß verhindern würde. Zu diesem Zweck ist an einer Seite an dem umgebördelten Rand oben, vorzugsweise gegenüberdem Henkel des unteren Flüssigkeitsbehälters, eine kleine Tülle als Entlüftungsöffnung geformt.

Innerhalb der Hülse und damit unterhalbe des trichterförmigen Teils ist der Einsatz anordenbar, der vor dem Betrieb aus einem lose mit Reinigungsmitteln gefüllten Beutel besteht, dessen Außendurchmesser klein genug ist, daß man den Beutel zum Einführen in die Hülse innen ohne Knittern herunterschieben kann. Wird dann die Flüssigkeit, z.B. das zu reinigende Wasser, oben in das trichterförmige Teil eingegossen, welches nach unten in die Hülse und auch in den Einsatz eindringt, dann werden nicht nur das Reinigungsmittel sondern auch der Beutel befeuchtet, das Reinigungsmittel quillt, so daß sich der Einsatz ausdehnt und flüssigkeitsdicht gegen die Innenwandung der Hülse anlegt. Weiterhin eindringendes Wasser kann dann aus dem trichterförmigen Teil nur auf Wege durch das Reinigungsmittel und unten aus Öffnungen aus der Hülse in den unteren Flüssigkeitsbehälter gelangen.

Mit Nachteil kann vor dem Quellen des Beutels mit Reinigungsmittel zu reinigende Flüssigkeit aus dem trichterförmigen Teil entlang den Innenwandungen der Hülse direkt in den darunter befindlichen Flüssigkeitsbehälter gelangen, ohne daß eine Reinigungswirkung stattgefunden hat. Ferner zeigt sich sowohl bei dieser, aus der einen der beiden Entgegenhaltungen genannten Wassereinigungsvorrichtung wie auch bei der anderen Vorrichtung nach der anderen Entgegenhaltung, daß die Öffnungen in den siebartigen Verschlußteilen sehr klein sind und durch die Oberflächenspannung im Wasser vernetzen können, so daß der Durchfluß der Flüssigkeit nicht ohne weiteres gewährleistet ist, wenn nicht ohne jeden Luftraum bis an die Innenwandungen gefüllte, flexible Beutel mit den damit verbundenen Nachteilen gemäß vorstehender Beschreibung verwendet werden.

Der Erfindung liegt daher die Aufgabe zugrunde, die Wasserreinigungsvorrichtung der eingangs bezeichneten Art unter Verwendung eines Einsatzes mit steifen Wänden so zu verbessern, daß eine besserer Durchfluß des Wassers durch den Einsatz mit den siebartigen Verschlußteilen gewährleistet ist, weil die Vernetzung und damit das Verschließen der schmalen Schlitze der siebartigen Verschlußteile vermieden werden.

Diese Aufgabe wird gemäß der Erfindung dadurch gelöst, daß an dem siebartigen Verschlußteil am oberen Ende des Einsatzes ein nach oben ragendes, oben mit Offnungen versehenes Entlüftungsrohr angebracht ist und daß das tirchterförmige Teil an seinem oberen Rand, der zur Auflage eines Deckels dient, Vorsprünge und/oder Ausnehmungen aufweist. Durch das Entlüftungsrohr, welches in vorteilhafter Weise auch gleich als Griff ausgebildet sein kann, um das obere, feste Verschlußteil besser zu handhaben, und durch seine Anbringung am oberen siebartigen Verschlußteil kann die Vernetzung der schmalen Sieböffnungen vorteilhaft ausgeschlossen werden, so daß die Flüssigkeit leichter durch den Einsatz und damit durch das Reinigungsmittel hindurchlaufen kann. Vorzugsweise sind die Öffnungen am Entlüftungsrohr oben über dem im trichterförmigen Teil befindlichen Flüssigkeitspegel angeordnet, Nun könnte sich unter widrigen Bedingungen gegebenenfalls eine geringes Vakuum in dem trichterförmigen Teil dann entwickeln, well ein dichtend abschließender Deckel aufgelegt wird, der im Handel bei der beschriebenen Wasserreinigungsvorrichtung zugleich mitgeliefert wird. Wenn aber gemäß dem vorstehend erwähnten Merkmal der Erfindung Vorsprünge, z.B. kleine Erhebungen, Ansätze oder Noppen und/oder Ausnehmungen, d.h. Nuten, Riffelungen oder Rillen, am Rand des trichterförmigen Teils, der zu Auflage eines Deckels dient, oben oder alternativ auch in komplementärer Weise an dem Deckel angebracht werden, dann wird die Bildung eines solchen Vakuums mit Sicherheit vermieden, und ein schnelles Durchlaufen der Flüssigkeit durch die Wasserreinigungsvorrichtung ist gewährleistet.

Durch die einstückig am trichterförmigen Teil angeformte Hülse ist auch eine hervorragende Dichtigkeit gegeben. Man findet auch eine gut Hygiene dadurch vor, daß das körnige Reinigungsmittel in dem becherartigen Einsatz untergebracht ist, der herausnehmbar in der Hülse angeordnet wird, weil der Endverbraucher mit dem Reinigungsmittel nicht mehr direkt in Berührung kommt. Dadurch wird das Einschleppen von Keimen in die lose Masse erheblich verringert, insbesondere dort, wo die Charge noch möglicherweise kleine, unbehandelte Oberflächen aufweist; und es wird dem Hersteller die vorteilhafte Möglichkeit gegeben, das richtige, ganz oder zumindest weitgehend oberflächenbehandelte Reinigungsmittel einzufüllen, ohne es dem Endverbraucher zu überlassen, welche Art Reinigungsmittel er zum Filtern zu verwenden wünscht. Durch das Austauschen den ganzen Einsatzes einschließlich darin enthaltenen Reinigungsmiteel im Falle der Erfindung wird auch die Hygiene gegenüber den bekannten Einsätzen in Form von formfähigen Beuteln verbessert, denn bei den Beuteln kommt der Benutzer zumindest mit den Außenflächen des Reinigungsmittels direkt in Verbindung, weil der gesamte Beutel aus porösem Material besteht, währen im Falle der Erfindung die etwa zylinderförmigen Mantelflächen nicht porös sind.

Weiterhin kann man auch die Dichtigkeit zwischen Einsatz und Hülse verbessern, wenn erfindungsgemäß ferner vorgesehen ist, am Einsatz außen eine an dessen Umfang verlaufend vorgesehene Nut-, oder wulstartige Dichteinrichtung anzuordnen. Die Flüssigkeit strömt leichter durch den Einsatz, weil die Vernetzung der schmalen Schlitze durch die Oberflächenspannung des Wassers ausgeschaltet ist, und es wird durch die vorstehend erwähnten Maßnahmen der Dichteinrichtungen erreicht, daß nahezu das gesamte zu reinigende Wasser ohne Leckage oder Bypass durch das Reinigungsmittel hindurchgeführt wird.

Die Halterung des Einsatzes läßt sich besonders zweckmäßig und einfach dann gewährleisten, wenn erfindungsgemäß am unteren Ende der Hülse eine Anschlag einstückig angeformt ist. Dieser Anschlag kann z.B. in Form eines am inneren Umfang der Hülse unten nach innen herausstehenden Anschlages oder eines kreuzförmigen Auflagers sein.

Die Erfindung ist ferner in zweckmäßiger Weise weiterhin dadurch ausgestaltet, daß die Hülse an ihrem oberen Ende zur Bildung einer Auflage erweitert ist. Diese Auflage ist vorzugsweise stufenförmig ausgebildet, wobei sich die Erweiterung am Übergang von der Hülse zu dem trichterförmigen Teil angeordnet ist.

Vorteilhaft ist es gemäß der Erfindung ferner, wenn der Einsatz becherförmig ausgebildet ist und eine Außenwände annähernd koaxial zu der Innenwandung der Hülse angeordnet sind. Auf diese Weise kann der zur Verfügung stehende Platz optimal ausgenutzt werden, so daß genügend Reinigungsmittel pro Einsatz, dem man auch die Form einer Patrone geben kann, eingesetzt werden kann. Geht man z.B. davon aus, daß täglich 1 bis 2 l Wasser gereinigt werden, d.h. durch die körnige Reinigungsmasse hindurchströmt, dann reicht die von Hersteller vorgesehene Masse an Reinigungsmittel für einen Zeitraum von etwa einem Monat. Es genügt also, wenn der Endverbraucher pro Monat eine neue, mit Reinigungsmittel gefüllte Patrone bzw. Einsatz gegen die verbrauchte Einheit austauscht. Stellt man den patronenförmigen Einsatz gemäß der Erfindung aus preiswertem Kunststoff her, dann ist der Preisunterschied gegenüber den derzeit im Handel in formlosen Plastiksäcken verpackten Reinigungsmitteln vernachlässigbar, wahrscheinlich sogar gleich oder geringer, wenn man die versehentlich verschütteten Mengen Reinigungsmittel beim Umfüllen berücksichtigt. Außerdem wird, wie oben schon erläutert, dem Endverbraucher die Möglichkeit genommen, falsches Reinigungsmittel zu verfüllen.

Weitere Vorteile, Merkmale und Anwendungsmöglichkeiten der vorliegenden Erfindung ergeben sich aus der folgenden Beschreibung im Zusammenhang mit den Zeichnungen. Es zeigen:

Fig. 1 einen Querschnitt durch eine Wasserreinigungsvorrichtung gemäß der Erfindung mit in die Hülse eingesetztem patronenförmigem Einsatz,

Fig. 2 den aus der Hülse herausgenommen Einsatz,

Fig. 3 im Schnitt den abgebrochenen, in Fig. 2 mit dem Kreis A bezeichneten Teil,

Fig. 4 in Seitenansicht das obere siebartige Verschlußteil mit angesetzten Entlüftungsrohr,

Fig. 5 eine Draufsicht auf die Ansicht gemäß Fig. 4,

Fig. 6 abgebrochen eine Seitenansicht des becherförmigen Einsatzes und

Fig. 7 eine Ansicht des Einsatzes von unten mit dem unteren siebartigen Verschlußteil.

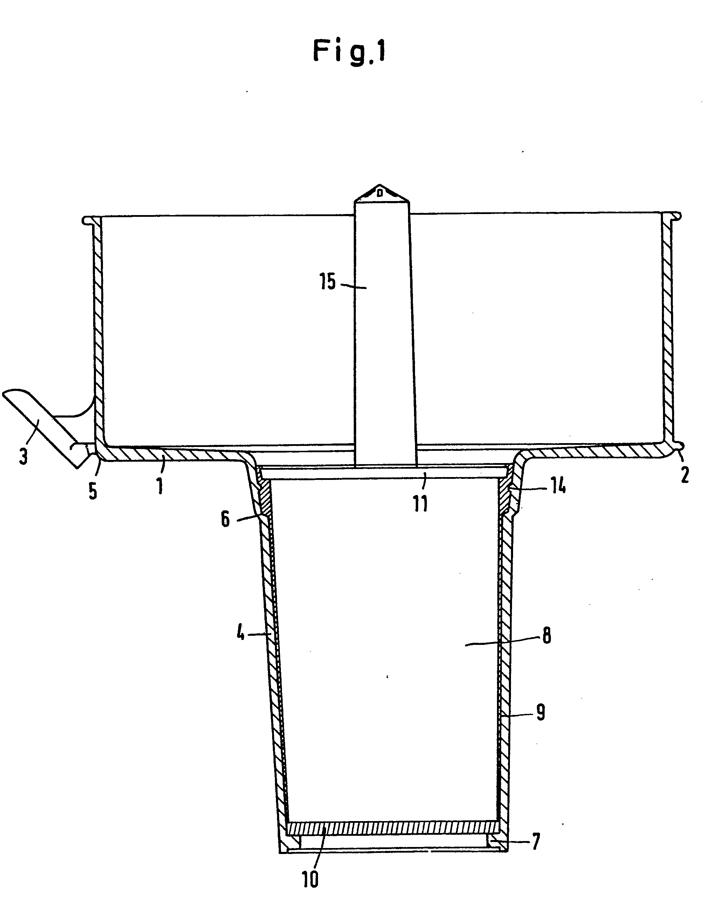

Das trichterförmige Teil 1 gemäß Figur 1 weist an seinem Rand außen einen Flansch 2 zum Auflegen auf den Rand eines Behälters und an einer Seite eine Schräg angestellte Lasche 3 auf, die beim Betätigen ein Hochklappen der Wasserreinigungsvorrichtung um den etwa bei 5 sich befindenden Drehpunkt gestattet. Dadurch kann man mit noch auf dem Behälter aufgelegter Wasserreinigungsvorrichtung die bereits gereinigte Flüssigkeit unmittelbar ausgießen.

Die an dem trichterförmigen Teil 1 unten mittig einstückig angeformte Hülse 4 ist oben in ihrem Übergang zu dem trichterförmigen Teil 1 mit einer stufenförmigen Auflage 6 durch Erweitern ausgestaltet. Bei der hier dargestellten Ausführungsform ist die Hülse schwach konisch nach unten verjüngt ausgestaltet. Die Hülse 4 weist an ihrem unteren Ende einen kurzen Rand 7 auf, der auf der Innenseite der Hülsenwandung einige Millimeter nach innen vorspringt, aber um den ganzen Umfang innen herumlaufen vorgesehen ist. Denkbar wäre bei einer anderen Ausführungsform das Anbringen lediglich einigen Ansätze oder Vorsprünge; oder man könnte anstelle der kurzen Ansätze eine Kreuzförmige Tragfläche vorsehen, deren vier Quadranten als große Öffning vorgesehen sind, durch welche die gereinigte Flüssigkeit in den darunter befindlichen Behälter fließt.

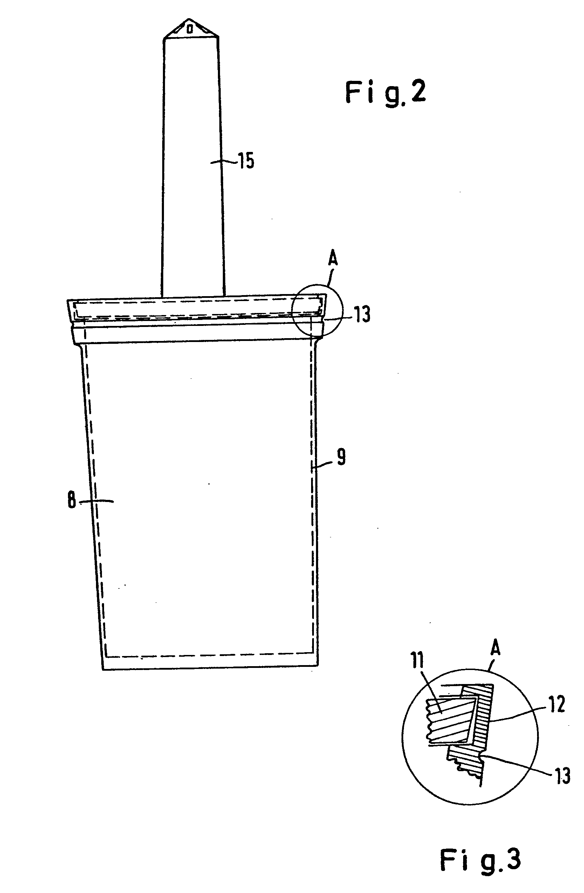

Diese Flüssigkeit kommt aus dem nicht dargestellten, in Wasser nicht löslichen, körnigen Reinigungsmittel, welches sich in dem in den Figuren 1 und 2 gezeigten, becherförmigen Einsatz 8 befindet. Dieser Einsatz besteht im wesentlichen aus einer annähernd zylinderförmigen Wandung 9 einem unteren siebartigen Verschlußteil 10 und einem oberen siebartigen Verschlußteil 11. Das untere Verschlußteil 10 kann mit der Wandung 9 aus einem Stück geformt oder auch separat angeordnet und durch Klemmen, Einschnappen oder dergleichen unten befestigt sein. Das obere Verschlußteil 11 wird vorzugsweise in der in Figur 3 gezeigten Art durch Einschnappen in die Ringnut 12 innen eingedrückt.

Außen weist der Einsatz 8 oben gemäß Darstellung der Figuren 2, 3 und 6 eine Dichtnut 13 auf, in welche ein an dem erweiterten Teil oben an der Hülse 4 (Figur 1) angeordnete Ringwulst 14 einschnappt.

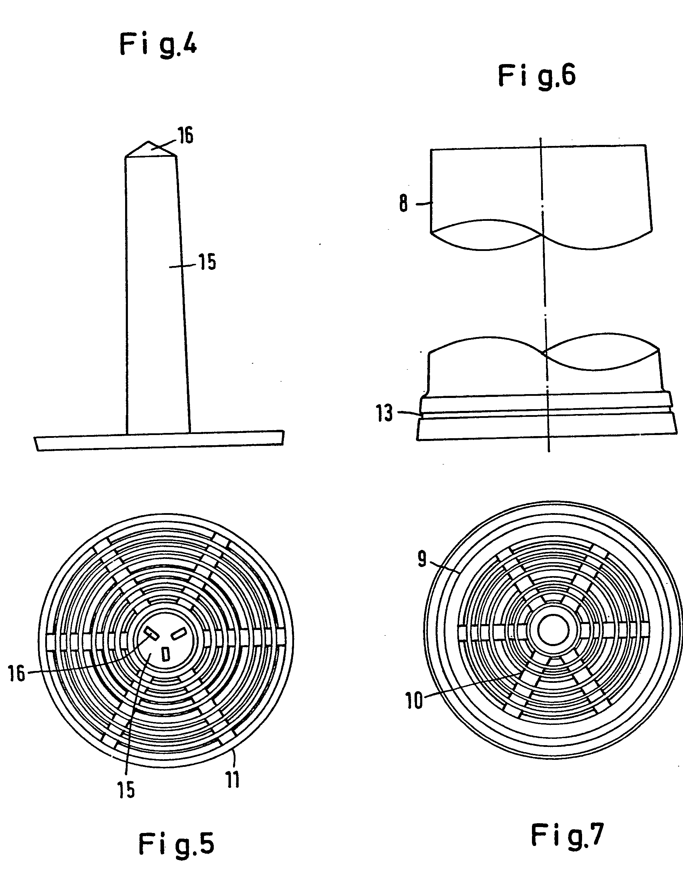

Blickt man gemäß Figur 2 von unten auf den Einsatz 8, so sieht man die Darstellung gemäß Figur 7 mit dem unteren siebartigen Verschlußteil 10 und der ebenfalls konisch schwach nach unten zulaufenden, etwa zylinderförmig geformten Wandung 9 des Einsatzes 8 mit der äußeren, am weitesten vorspringenden Kante. Man erkennt, daß der Duchmesser des unteren siebartigen Verschlußteils 10 kleiner als der des in Figur 5 gezeigten oberen siebartigen Verschlußteils 11 ist. An letzterem ist mittig ein nach oben ragendes Entlüftungsrohr 15 angeformt, das oben mit Belüftungsöffnungen 16 versehen ist. Man erkennt, daß der Endverbraucher das Entlüftungsrohr 15 zugleich als Griff für die Handhabung des gesamten Einsatzes 8 verwenden kann.

**Patentansprüche**

1. Vorrichtung zur Wasserreinigung mit einem trichterförmigen Teil (1), einer Hülse (4) und mit zwei siebartigen Verschlußteilen (10, 11) an den beiden Enden, die einen Aufnahmeraum für ein körniges, in Wasser nicht lösliches Reinigungsmittel begrenzen und deren Durchtrittsöffnungen kleiner als die Körner des Reinigungsmittels sind, wobei die Hülse (4) mit dem trichterförmigen Teil (1) aus einem Stück geformt ist und in der Hülse (4) ein Einsatz (8), an dessen beiden entgegengesetzten Enden die siebartigen Verschlußteile (10, 11) vorgesehen sind, herausnehmbar angeordnet ist, dadurch gekennzeichnet, daß an dem siebartigen Verschlußteil (11) am oberen Ende des Einsatzes (8) ein nach oben ragendes, oben mit Öffnungen (16) versehenes Entlüftungsrohr (15) angebracht ist und daß das trichterförmige Teil (1) an seinem oberen Rand, der zur Auflage eines Deckels dient, Vorsprünge und/oder Ausnahmungen aufweist.

2. Vorrichtung nach Anspruch 1, dadurch gekennzeichnet, daß der Einsatz (8) außen eine an seinem Umfang umlaufend vorgesehene nut- oder wulstartige Dichteinrichtung (13) aufweist.

3. Vorrichtung nach einem der Ansprüche 1 oder 2, dadurch gekennzeichnet, daß am unteren Ende der Hülse (4) eine Anschlag (7) einstückig angeformt ist.

4. Vorrichtung nach einem der Ansprüche 1—3, dadurch gekennzeichnet, daß die Hülse (4) an ihrem oberen Ende zur Bildung einer Auflage (6) erweitert ist.

5. Vorrichtung nach einem der Ansprüche 1—4, dadurch gekennzeichnet, daß der Einsatz (4) becherförmig ausgebildet ist und seine Außenwände (9) annähernd koaxial zur Innenwandung der Hülse (4) angeordnet sind.

**Revendications**

1. Dispositif d'épuration d'eau comportant une partie (1) en forme d'entonnoir, une douille (4) et deux éléments d'obturation en forme de tamis (10, 11) aux deux extrémités de la douille, qui délimitent un volume de réception pour un agent d'épuration granuleux non soluble dans l'eau et dont les interstices sont plus petits que les grains de l'agent d'épuration, la douille (4) étant réalisée en une seule pièce avec la partie (1) en forme d'entonnoir de même que dans la douille (4) est disposée de manière à pouvoir être retirée, une recharge (8) aux deux extrémités opposées de laquelle sont prévus les éléments d'obturation en forme de tamis (10, 11), caractérisé en ce que sur l'élément d'obturation en forme de tamis (11) à l'extrémité supérieure de la recharge (8) est prévu un tube d'aération (15) dépassant vers le haut, muni d'ouvertures (16) et en ce que la partie (1) en forme d'entonnoir présente au niveau de son bord supérieur qui sert d'appui à un couvercle, des parties saillantes et/ou des découpes.

2. Dispositif selon la revendication 1, caractérisé en ce que la recharge (8) présente extérieurement un système de joint (13) en forme de bourrelet ou de rainure s'étendant sur toute sa périphérie.

3. Dispositif selon la revendication 1 ou 2, caractérisé en ce qu'à l'extrémité inférieure de la douille (4) est formée en une seule pièce, une butée (7).

4. Dispositif selon l'une des revendications 1 à 3, caractérisé en ce que la douille (4) est élargie à son extrémité supérieure pour former un appui (6).

5. Dispostif selon l'une des revendications 1 à 4, caractérisé en ce que la recharge (8) est configurée en gobelet et en ce que ses parois extérieures (9) sont disposées approximativement coaxialement à la paroi interne de la douille (4).

**Claims**

1. A water purification apparatus comprising a funnel-like portion (1), a sleeve (4) and two sieve-like closure portions (10, 11) at the two ends, which define a receiving chamber for a granular water-insoluble purification agent, and the through openings of which are smaller than the grains of the purification agent, wherein the sleeve (4) is formed in one piece with the funnel-like portion (1), and an insert (8) is removably arranged in the sleeve (4), the sieve-like closure portions (10, 11) being disposed at the two opposite ends of said insert (8), characterised in that an upwardly projecting vent pipe (15) which is provided with openings (16) at its top is mounted to the sieve-like closure portion (11) at the upper end of the insert (8), and that the funnel-like portion (1) is provided with projections and/or recesses at its upper edge which serves to support a cover.

2. Apparatus according to Claim 1 characterised in that the insert (8) is provided on its outside with a groove-type or bead-type sealing means (13) which is provided around the periphery thereof.

3. Apparatus according to one of Claims 1 or 2 characterised in that an abutment (7) is integrally formed on the lower end of the sleeve (4).

4. Apparatus according to one of Claims 1 to 3 characterised in that the sleeve (4) is enlarged at its upper end to form a support means (6).

5. Apparatus according to one of Claims 1 to 4 characterised in that the insert (8) is of a beaker-like configuration and the outside walls (9) of the insert are arranged approximately coaxially with respect to the inside wall of the sleeve (4).

Fig.1

Fig. 2

Fig. 3

**Fi g.4**

**Fi g.6**

16

15

8

13

16

15

11

9

10

**Fi g.5**

**Fi g.7**